Europäisches Patentamt

European Patent Office

Office européen des brevets

(19)

(11) Veröffentlichungsnummer: **0 277 337 B1**

## EUROPÄISCHE PATENTSCHRIFT

(12)

(45) Veröffentlichungstag der Patentschrift: **18.09.91**

(21) Anmeldenummer: **87118910.6**

(22) Anmeldetag: **19.12.87**

(51) Int. Cl.⁵: **F24C 15/00, A47J 39/00, A47J 27/16**

(54) **Gargerät mit elektrischer Beheizung eines Garraumes und Verfahren zum Betreiben dieses Gargerätes.**

(30) Priorität: 05.02.87 DE 3703467
06.02.87 DE 3703540
07.02.87 DE 3703857
07.02.87 DE 3703814

(43) Veröffentlichungstag der Anmeldung:
**10.08.88 Patentblatt 88/32**

(45) Bekanntmachung des Hinweises auf die
Patenterteilung:
**18.09.91 Patentblatt 91/38**

(84) Benannte Vertragsstaaten:
**AT BE CH DE FR GB IT LI NL**

(56) Entgegenhaltungen:
DE-A- 1 679 196
FR-A- 2 462 103
GB-A- 2 176 695

(73) Patentinhaber: **Electrolux-Juno Küchentechnik
GmbH
Junostrasse Postfach 1160
W-6348 Herborn(DE)**

(72) Erfinder: **Merz, Heinrich**

Steintal 10
W-6348 Herborn-Seelbach(DE)
Erfinder: **Lubbe, Karlheinz
Mittelstrasse 34
W-6348 Herborn-Seelbach(DE)**
Erfinder: **Dietrich, Wilfried
Austrasse 17
W-6349 Siegbach-Eisemroth(DE)**
Erfinder: **Müller, Erich
Hofackerstrasse 8
W-6349 Siegbach-Oberndorf(DE)**
Erfinder: **Plücker, Eugen
Fritz-Jung-Strasse 12
W-6348 Herborn(DE)**

(74) Vertreter: **Grosse, Wolfgang et al
Patentanwälte Herrmann-Trentepohl, Kirschner Grosse, Bockhorni & Partner Forstenrieder Allee 59
W-8000 München 71(DE)**

Rank Xerox (UK) Business Services

**Beschreibung**

Die Erfindung betrifft ein Gargerät mit elektrischer Beheizung eines Garraumes und einem Heißluft-Umwälzgebläse, insbesondere eines Einbaubackofens, sowie ein Verfahren zum Betreiben eines derartigen Gargerätes.

Einbauböcken werden in Einbauküchen in die sie umgebenden Schränke eingebaut und gegebenenfalls mit einer Einbau-Kochmulde ergänzt. Über die wahlweise Einschaltung der Heizkörper für Ober- und/oder Unterhitze und gegebenenfalls des Heißluft-Umwälzgebläses kann die Art der Beheizung dem jeweils zu behandelnden Gargut angepaßt werden. Allen Anforderungen kann aber damit nicht optimal entsprochen werden, weil manches Gar-und Backgut durch Wasserdampf wesentlich besser behandelt wird. Es gibt zwar Geräte, welche mit zirkulierendem Wasserdampf betrieben werden, aber dabei handelt es sich um Spezialgeräte und nicht um einen üblichen Einbaubackofen für Haushaltsküchen.

Die DE-A-1679 196 beschreibt bereits einen Küchenherd mit einer muldenartigen Vertiefung des Bodens der Backofenmuffel, in welcher die Unterhitze-Heizkörper angeordnet sind. In diese Vertiefung eingefülltes Wasser kann durch die Unterhitze-Heizkörper verdampft werden. Der Backofen ist so auch als Dampfkochraum zu nutzen.

Ein voneinander unabhängiges Betreiben der verschiedenen Beheizungsarten, wie Unter- und/oder Oberhitze, Heißluft-Umwälzung und Dampf für die jeweils optimalen Bedingungen eines Garprozesses ist dabei nicht möglich.

Die Erfindung geht von der Aufgabe aus, den bisher in Haushaltsküchen üblichen Einbaubackofen in seinen Einsatzmöglichkeiten zu erweitern, indem auf einfache Weise auch ein Dämpfbetrieb möglich ist.

Zur Lösung dieser Aufgabe werden die im Patentanspruch 1 angegebenen Merkmale vorgeschlagen.

In das Verdampfungsgefäß im Boden der Backofenmuffel kann ohne weiteres die erforderliche Menge Wasser eingefüllt und durch die elektrische Heizung zum Verdampfen gebracht werden.

Die Zeichnung zeigt Ausführungsbeispiele der Erfindung und zwar in

Fig. 1 einen Einbaubackofen mit einer Schublade als Wassereinfüllgefäß,

Fig. 2 einen Einbaubackofen mit automatischer Wasserzuführung aus dem Wasserleitungsnetz und einem Schaltbeispiel für ein Taktprogramm,

Fig. 3 den Dampferzeuger mit Schmutzwasserablaufvorrichtung in größerem Maßstab,

Fig. 4 ein Gargerät mit einem Schaltbeispiel für die Garraumwand-Vorwärmung,

Fig. 5 ein beispielhaftes Taktprogramm.

Das die Backofenmuffel 1 umgebende Gehäuse 2 des Einbaubackofens ist nur schematisch angedeutet.

In den Boden 3 der Backofenmuffel ist ein topfartiges Verdampfungsgefäß 4 eingesetzt, welches an eine Wasserzuführungsleitung 5 angeschlossen ist.

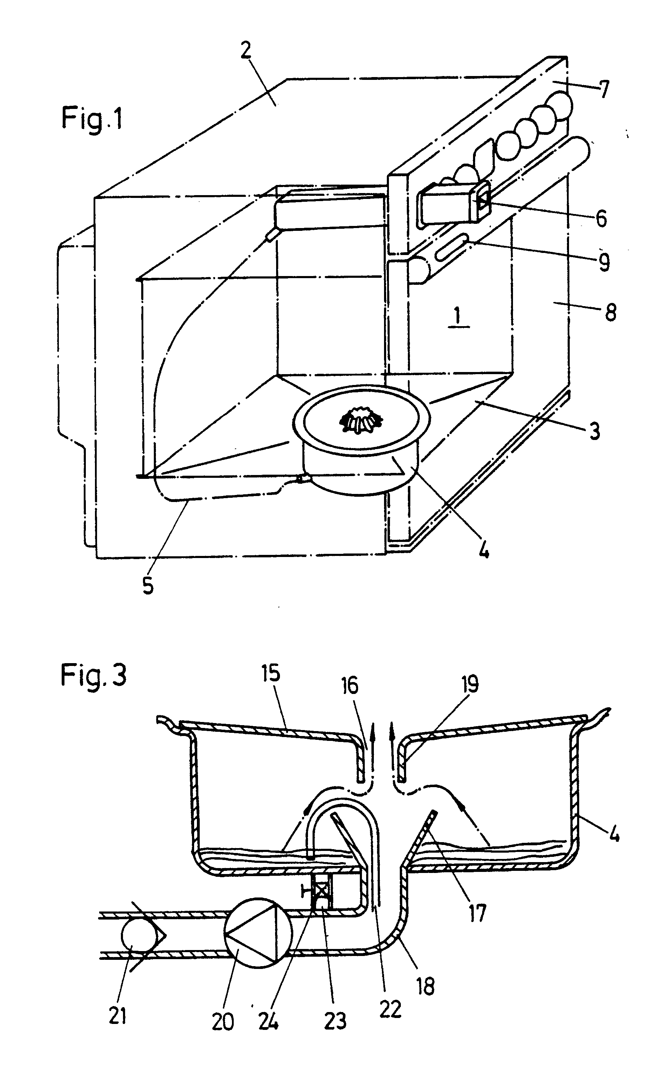

Bei der Ausführung gemäß Fig. 1 geht die Wasserzuführungsleitung 5 von einem als Schublade 6 ausgebildeten Wassereinfüllbehälter aus, welcher im Bereich der Bedienungsblende 7 oberhalb der Beschickungstür 8 angeordnet ist. Für die Hausfrau ist es kein Problem, die Schublade 6 nach außen vorzuziehen und die benötigte Wassermenge einzufüllen. Über die elastische Wasserzuführungsleitung 5 fließt das eingefüllte Wasser in den Verdampfungsbehälter 4 und wird dort durch eine elektrische Heizung zum Verdampfen gebracht. Bei Dämpfbetrieb sollte die übliche Wrasenaustrittsöffnung 9 z.B. durch einen Schieber verschließbar sein.

Es ist auch denkbar, den als Schublade ausgebildeten Wassereinfüllbehälter an der Verbindungsstelle zur Wasserzuführungsleitung 5 mit einer Schnellkupplung zu versehen, die im entkuppelten Zustand den Wasserauslauf verhindert ihn im eingekuppelten Zustand aber freigibt.

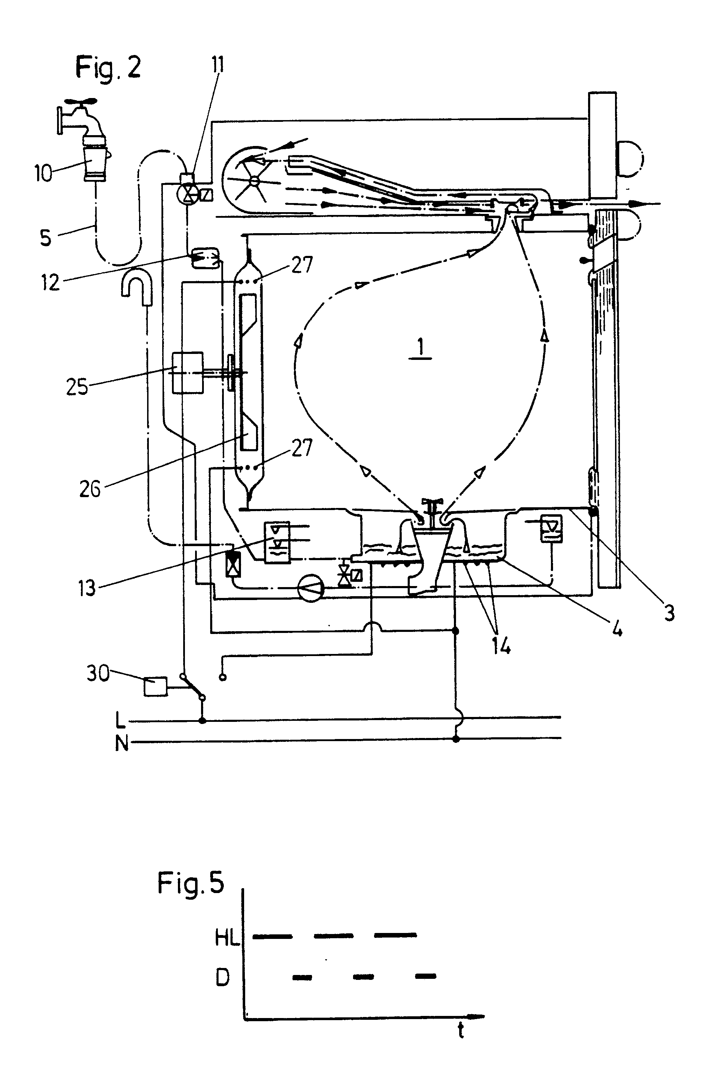

In Fig. 2 ist zu sehen, daß der Wasseranschluß auch direkt an der Zapfstelle 10 einer Wasserleitung erfolgen kann. Die Wasserzuführungsleitung 5 ist dabei mit einem steuerbaren Zulaufventil 11 sowie einer angeschlossenen Luftkammer 12 versehen, über welche in bekannter Weise der mit einem Arbeitskontakt sowie mit einem Sicherheitskontakt versehene Niveauschalter 13 betätigt wird. Diese Niveausteuerung sorgt dafür, daß eine bestimmte Flüssigkeitshöhe im Verdampfungsgefäß 4 nicht überschritten wird.

Sollte das Verdampfungsgefäß 4 beheizt werden, ohne daß sich Wasser darin befindet, so kann der Wassermangel durch ein Signal angezeigt werden, z.B. durch ein akustisches oder optisches Signal. Wird trotzdem kein Wasser zugeführt, schaltet ein Trockengehschutz die Beheizung aus. Der Boden der Backofenmuffel ist zweckmäßig zu dem mittigen Verdampfungsgefäß hin mit Gefälle versehen, so daß sich am Boden ansammelndes Kondensat entweder in das Verdampfungsgefäß 4 zurückgeleitet wird, oder über eine zentrale Schmutzwasserabführung abgeleitet werden kann.

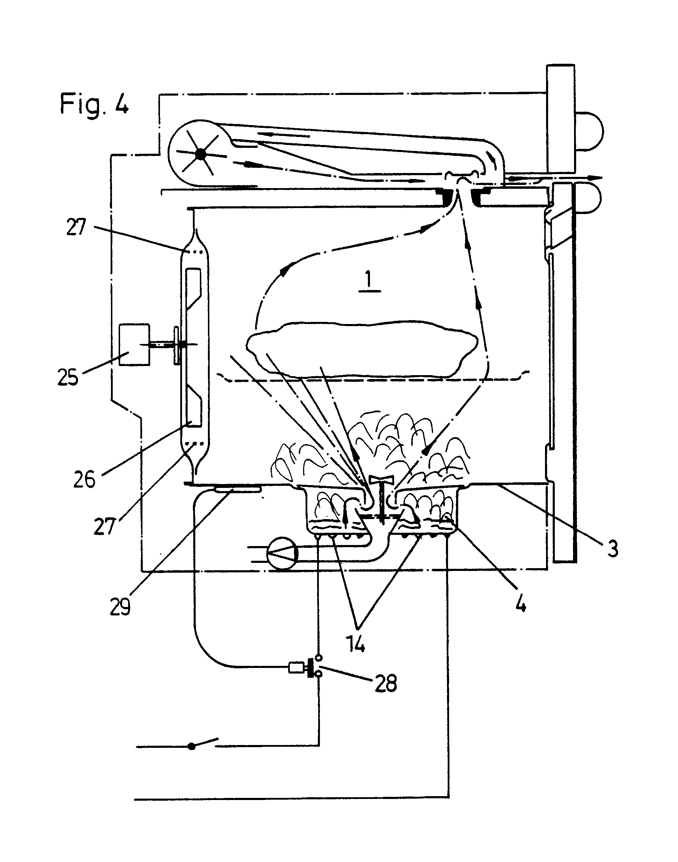

In Fig. 3 ist eine solche zentrale Schmutzwasserabführung in größerem Maßstab und mit weiteren Details dargestellt.

Im Boden 3 des Garraumes 1 ist das Verdampfungsgefäß 4 eingelassen, in welchem eingefülltes Wasser durch elektrische Heizelemente 14 zum Verdampfen gebracht wird.

Das Verdampfungsgefäß 4 ist durch einen in Höhe des Garraumbodens 3 liegenden Deckel 15 mit einer zentralen Dampfaustrittsöffnung 16 abgedeckt.

Unterhalb der Dampfaustrittsöffnung 16 befindet sich ein bis oberhalb des Wasserspiegels reichender Ablauftrichter 17, welcher mit der Ablaufleitung 18 in Verbindung steht. Die Dampfaustrittsöffnung 16 ist mit einer zum Ablauftrichter 17 ragenden Abkantung 19 versehen. Der erzeugte Wasserdampf muß somit den durch Pfeile angedeuteten Weg über die Oberkante des Ablauftrichters 17 und die Unterkante der Abkantung 19 zur Dampfaustrittsöffnung 16 nehmen. Im Garraum anfallendes Kondensat und Schmutzwasser kann über den etwas geneigten Garraumboden bzw. Deckel über die Dampfaustrittsöffnung 16 in den Ablauftrichter 17 zur Ablaufleitung 18 fließen. Von hier kann mittels einer Pumpe 20 das Schmutzwasser zu einem höher liegenden Ausgußbecken oder dgl. gefördert werden. Ein Rückschlagventil 21 verhindert den Rückfluß zum Verdampfungsgefäß. Falls sich eine Entleerung des Verdampfungsgefäßes 4 als notwendig erweist, kann dies über einen Saugheber 22 oder eine Entleerungsleitung 23 erfolgen, welche mit der Ablaufleitung in Verbindung steht und durch ein Ventil 24 verschlossen bzw. geöffnet werden kann.

Beim Betreiben eines solchen Gargerätes sind einige Dinge zu beachten, welchen durch entsprechende Maßnahmen begegnet werden kann.

Wasserdampf schlägt sich an kühleren Teilen des Garraumes wieder als Kondensat nieder.

Haushaltbacköfen sind mit einem relativ niedrigen elektrischen Anschlußwert versehen, so daß die Dampferzeugung verbunden mit wiederholter Kondensation an den kühleren Garraumwänden beim Anfahren des Gerätes oder auch bei zwischenzeitlicher Dampfeinführung nicht immer in der gewünschten Zeit zu optimalen Verhältnissen im Garraum führt.

Wenn aber die Garraumwandung bereits eine höhere Temperatur, insbesondere etwa 100 °C aufweist, wird der zugeführte Wasserdampf sofort für die Dampfbehandlung wirksam, weil sich der Wasserdampf nicht mehr wesentlich an den Garraumwänden niederschlägt. Der Garablauf des Garvorganges wird auf diese Weise wesentlich verbessert. Auch kommt man für einen Garvorgang mit weniger Wasser aus. In Fig. 4 ist ein Gargerät mit einer Schaltung zur Voraufheizung gezeigt.

An der Rückwand des Garraumes 1 ist ein vom Motor 25 antreibbares Lüfterrad 26 für die Heißluftumwälzung innerhalb des Garraumes angeordnet. Der im Boden 3 des Garraumes 1 eingelassene Wasserbehälter 4 ist zur Dampferzeugung über die elektrischen Heizelemente 14 aufheizbar. Die an den Heizwiderständen 27 vorbeiströmende Luft erwärmt den Garraum und damit auch die Garraumwände. Bei der Dampferzeugung ist über einen Unterbrecher 28, der von einem die Garraumwand abtastenden Temperaturfühler 29 betätigt wird, dafür gesorgt, daß die Dampferzeugung erst bei ausreichender Garraumwandtemperatur erfolgt.

Die übliche Beheizung des Garraumes muß nicht nur über Heißluftumwälzung erfolgen, sondern könnte auch durch übliche Heizelemente für Ober- und/oder Unterhitze erreicht werden.

Es ist auch möglich die Garraumwandung gleichzeitig mit dem Einschalten der Heizelemente 14 des Dampferzeugers aufzuheizen. Bis es zur Verdampfung des Wassers kommt sind die Garraumwände schon so aufgeheizt, daß Kondensatbildung weitgehend vermieden wird.

Falls zur Zubereitung der Speisen gleichzeitig der Heißlufterzeuger und der Dampferzeuger in Betrieb sein sollen, wäre eine hohe elektrische Anschlußleistung für das Gerät notwendig, was für in einer Haushaltsküche einzubauende Gargeräte mit relativ hohem Aufwand verbunden ist.

Durch taktweises abwechselndes Einschalten des Heißlufterzeugers bzw. des Dampferzeugers ist jeweils nur ein Teil der elektrsichen Heizkörper angeschlossen, und doch ist eine ausreichende Aufheizung des Garraumes und die ausreichende Dampferzeugung möglich.

Wie Fig. 2 zeigt, sorgt ein Taktschalter 30 in der Stromzuführung für beide Beheizungsarten für die Heizwiderstände 27 zur Warmlufterzeugung bzw. die Heizelemente 14 des Verdampfungsgefäßes 14 für die abwechselnde Einschaltung der einen oder der anderen Beheizungsart. Im Diagramm nach Fig. 5 ist schematisch die mögliche Taktfolge angedeutet. HL deutet die Einschaltzeiten der Heißluftheizung und D die des Dampferzeugers an.

Als Taktschalter 30 kann ein Energieregler dienen, wie er zur Kochplattensteuerung üblich ist, und der als Umschalter ausgebildet ist.

**Patentansprüche**

1.  Gargerät mit elektrischer Beheizung eines Garraumes für Unter- und Oberhitze sowie einem Verdampfungsgefäß (4) im Boden der Backofenmuffel zur Aufnahme von zu verdampfendem Wasser, insbesondere Einbaubackofen mit Heißluft-Umwälzgebläse, dadurch gekennzeichnet, daß das Verdampfungsgefäß (4) als mittig im Boden (3) der Backofenmuffel (1) eingelassener, separat beheizbarer und steuerbarer Topf ausgebildet ist, zu welchem der Boden der Backofenmuffel (1) hin mit Gefälle verläuft.

2. Gargerät nach Anspruch 1, dadurch gekennzeichnet, daß das Verdampfungsgefäß (4) an eine Wasserzuführungsleitung (5) angeschlossen ist.

3. Gargerät nach Anspruch 1 und/oder 2, dadurch gekennzeichnet, daß die Wasserzuführungsleitung (5) von einem als Schublade (6) ausgebildeten und im Bereich der Bedienungsblende (7) angeordneten Wassereinfüllbehälter ausgeht.

4. Gargerät nach Anspruch 3, dadurch gekennzeichnet, daß die Schublade (6) als ein aus dem Gerät entfernbarer Tank ausgebildet ist, der mittels Schnellkupplung mit der Wasserzuführungsleitung (5) verbindbar ist.

5. Gargerät nach Anspruch 1 und/oder 2, dadurch gekennzeichnet, daß die Wasserzuführungsleitung (5) an eine Zapfstelle (10) der Wasserversorgung unter Zwischenschaltung einer außerhalb des Verdampfungsgefäßes (4) angeordneten Niveausteuerung (12,13) angeschlossen ist.

6. Gargerät nach Anspruch 5, dadurch gekennzeichnet, daß die Niveausteuerung aus einem Zulaufventil (11) und einem über eine Luftkammer (12) angeschlossenen Niveauschalter (13) mit einem Arbeits- sowie einem Sicherheitsniveaukontakt besteht.

7. Gargerät nach einem der Ansprüche 1 bis 6, dadurch gekennzeichnet, daß die Wrasenabzugsöffnung (9) verschließbar ist.

8. Gargerät nach einem der Ansprüche 1 bis 7, gekennzeichnet durch ein bei Wassermangel des beheizten Verdampfungsgefäßes (4) betätigtes optisches und/oder akustisches Signal.

9. Gargerät nach einem der Ansprüche 1 bis 7, dadurch gekennzeichnet, daß bei Wassermangel des beheizten Verdampfungsgefäßes (4) die Beheizung abgeschaltet wird.

10. Gargerät nach einem der Ansprüche 1 bis 9, dadurch gekennzeichnet, daß im Verdampfungsgefäß (4) ein den Wasserspiegel überragender, zu einer Ablaufleitung (18) führender Ablauftrichter (17) vorgesehen ist, sowie das Verdampfungsgefäß mit einem in Höhe des Garraumbodens (3) liegenden Deckel (15) mit einer Dampfaustrittsöffnung (16) oberhalb des Ablauftrichters (17) abgedeckt ist, wobei die Dampfaustrittsöffnung mit einer etwa bis zur Oberkante des Ablauftrichters (17) ragenden Abkantung (19) versehen ist.

11. Gargerät nach Anspruch 10, dadurch gekennzeichnet, daß die Ablaufleitung (18) mit einer Pumpe (20) und einem dieser vor- oder nachgeschalteten Rückschlagventil (21) versehen ist.

12. Gargerät nach Anspruch 10 und/oder 11 dadurch gekennzeichnet, daß das Verdampfungsgefäß (4) mit einem in den Ablauftrichter (17) führenden Saugheber (22) versehen ist.

13. Gargerät nach Anspruch 10 und/oder 11 dadurch gekennzeichnet, daß das Verdampfungsgefäß (4) mit einer zur Ablaufleitung (18) führenden, wahlweise verschließbaren Entleerungsleitung (23) versehen ist.

14. Gargerät nach einem der Ansprüche 10 bis 13 dadurch gekennzeichnet, daß der Deckel (15) lösbar mit dem Boden des Garraumes bzw. dem Verdampfungsgefäß (4) verbunden ist.

15. Gargerät nach einem der Ansprüche 10 bis 14 dadurch gekennzeichnet, daß die Dampfaustrittsöffnung (16) gleichzeitig als Schmutzsieb für zurücklaufendes Wasser ausgebildet ist.

16. Gargerät nach einem der Ansprüche 12 bis 15 dadurch gekennzeichnet, daß der obere Rand des Ablauftrichters (17) den unteren Rand der Abkantung (19) allseits überragt.

17. Verfahren zum Betreiben eines Gargerätes nach einem der Ansprüche 1 bis 16 dadurch gekennzeichnet, daß die Garraumwandung erwärmt wird, bevor dem Garraum Wasserdampf zugeführt wird.

18. Verfahren nach Anspruch 17, dadurch gekennzeichnet, daß die Garraumwandung auf etwa 100° C vorgewärmt wird.

19. Verfahren nach Anspruch 17 dadurch gekennzeichnet, daß gleichzeitig mit der Beheizung des Verdampfungsgefäßes die Garraumwandung mittels der elektrischen Garraumheizung aufgeheizt wird.

20. Verfahren nach einem der Ansprüche 17 bis 19 dadurch gekennzeichnet, daß während eines Garvorganges der Garraum taktweise und abwechselnd durch den Heißlufterzeuger bzw. den Dampferzeuger aufgeheizt wird.

**21.** Verfahren nach Anspruch 20
dadurch gekennzeichnet, daß sich die Taktzeit von jeweils eingeschaltetem Heißlufterzeuger und Dampferzeuger etwa wie 3:1 verhält.

**22.** Verfahren nach Anspruch 20 und/oder 21
dadurch gekennzeichnet, daß ein Taktzyklus etwa 1/2 Minute dauert.

**Claims**

1. Cooking appliance with electrical heating of a booking chamber for bottom and top heat as well as an evaporation vessel (4) in the base of the oven retort for accommodating water which is to be evaporated, in particular a built-in oven with a warm air rotary fan, characterised in that the evaporation vessel (4) is in the form of a pot which is embedded in the centre in the base (3) of the oven retort (1), can be heated and controlled separately and to which the base of the oven retort (1) extends in an inclined manner.

2. Cooking appliance according to claim 1, characterised in that the evaporation vessel (4) is connected to a water supply pipe (5).

3. Cooking appliance according to claim 1 and/or 2, characterised in that the water supply pipe (5) departs from a water feed container which is built in the form of a drawer (6) and is disposed in the vicinity of the operating panel (7).

4. Cooking appliance according to claim 3, characterised in that the drawer (6) is in the form of a tank which can be removed from the appliance and can be connected to the water supply pipe (5) by means of a quick fitting pipe union.

5. Cooking appliance according to claim 1 and/or 2, characterised in that the water supply pipe (5) is connected to a dispensing point (10) of the water supply with the interposition of a level control device (12, 13) disposed externally of the evaporation vessel (4).

6. Cooking appliance according to claim 5, characterised in that the level control device comprises a delivery valve (11) and a level switch (13), connected via an air chamber (12), with an operating contact and a safety level contact.

7. Cooking appliance according to any one of claims 1 to 6, characterised in that the water vapour discharge aperture (9) can be closed.

8. Cooking appliance according to any one of claims 1 to 7, characterised by an optical and/or acoustic signal which is actuated when the heated evaporation vessel (4) lacks water.

9. Cooking appliance according to any one of claims 1 to 7, characterised in that the heating system is switched off when the heated evaporation vessel (4) lacks water.

10. Cooking appliance according to any one of claims 1 to 9, characterised in that there is provided in the evaporation vessel (4) a discharge funnel (17), which projects above the water level and leads to a discharge pipe (18), and the evaporation vessel is covered by a lid (15), disposed at the level of the cooking chamber base (3), with a steam outlet aperture (16) above the discharge funnel (17), wherein the steam outlet aperture is provided with a folded portion (19) projecting approximately to the upper edge of the discharge funnel (17).

11. Cooking appliance according to claim 10, characterised in that the discharge pipe (18) is provided with a pump (20) and a non-return valve (21) arranged in front of or after the latter.

12. Cooking appliance according to claim 10 and/or 11, characterised in that the evaporation vessel (4) is provided with a siphon (22) leading into the discharge funnel (17).

13. Cooking appliance according to claim 10 and/or 11, characterised in that the evaporation vessel (4) is provided with an emptying pipe (23) which leads to the discharge pipe (18) and can be closed in an optional manner.

14. Cooking appliance according to any one of claims 10 to 13, characterised in that the lid (15) is detachably connected to the base of the cooking chamber or the evaporation vessel (4).

15. Cooking appliance according to any one of claims 10 to 14, characterised in that the steam outlet aperture (16) is also formed as a dirt filter for returning water.

16. Cooking appliance according to any one of claims 12 to 15, characterised in that the upper edge of the discharge funnel (17) projects over the lower edge of the folded section (19) on all sides.

17. Process for operating a cooking appliance according to any one of claims 1 to 16, characterised in that the cooking chamber wall is heated before water vapour is delivered to the cooking chamber.

18. Process according to claim 17, characterised in that the cooking chamber wall is preheated to a temperature of approximately 100° C.

19. Process according to claim 17, characterised in that the cooking chamber wall is heated by means of the electrical cooking chamber heating system at the same time as the evaporation vessel is heated.

20. Process according to any one of claims 17 to 19, characterised in that the cooking chamber is heated in a cyclic and alternating manner by the warm air generator or the steam generator, during a cooking process.

21. Process according to claim 20, characterised in that the cycle time of the warm air generator and steam generator engaged in each case is approximately 3:1.

22. Process according to claim 20 and/or 21, characterised in that a basic cycle lasts approximately 1/2 minute.

**Revendications**

1. Appareil de cuisson, avec une enceinte de cuisson à chauffage électrique, pour chauffer par dessous et par dessus, ainsi qu'un récipient de vaporisation (4), placé dans le fond du moufle du four de cuisson, en vue de recevoir de l'eau à vaporiser, en particulier four de cuisson à encastrer, avec soufflante de circulation de l'air chaud, caractérisé en ce que le récipient de vaporisation (4) est réalisé sous forme d'un pot, inséré au centre du fond (3) du moufle de four de cuisson (1), susceptible d'être chauffé et commandé séparément, vers lequel le fond du moufle de four de cuisson (1) descend avec une pente.

2. Appareil de cuisson selon la revendication 1, caractérisé en ce que le récipient de vaporisation (4) est raccordé à une conduite d'amenée d'eau (5).

3. Appareil de cuisson selon la revendication 1 et/ou 2, caractérisé en ce que la conduite d'amenée d'eau (5) part d'un réservoir de remplissage en eau, réalisé sous forme de tiroir (6) et disposé dans la zone du panneau de manoeuvre (7).

4. Appareil de cuisson selon la revendication 3, caractérisé en ce que le tiroir (6) est réalisé sous forme d'un réservoir susceptible d'être extrait de l'appareil, pouvant être relié à la conduite d'amenée d'eau (5) au moyen d'un accouplement rapide.

5. Appareil de cuisson selon la revendication 1 et/ou 2, caractérisé en ce que la conduite d'amenée d'eau (5) est raccordée à un emplacement de robinet (10) de l'alimentation en eau, en intercalant une commande de niveau (12,13) disposée à l'extérieur du récipient de vaporisation (4).

6. Appareil de cuisson selon la revendication 5, caractérisé en ce que la commande de niveau se compose d'une soupape d'alimentation (11) et d'un interrupteur de niveau (13), raccordé par l'intermédiaire d'une chambre atmosphérique (12), avec un contact de niveau de travail et un contact de niveau de sécurité.

7. Appareil de cuisson selon l'une des revendications 1 à 6, caractérisé en ce que l'ouverture de bouche d'aération (9) est obturable.

8. Appareil de cuisson selon l'une des revendications 1 à 7, caractérisé par un signal optique et/ou acoustique, actionné en cas de manque d'eau du récipient de vaporisation chauffé (4).

9. Appareil de cuisson selon l'une des revendications 1 à 7, caractérisé en ce que le chauffage du récipient de vaporisation chauffé (4) est mis hors service en cas de manque d'eau.

10. Appareil de cuisson selon l'une des revendications 1 à 9, caractérisé en ce qu'un entonnoir d'évacuation (17), situé au-dessus du niveau de l'eau et menant à une conduite d'évacuation (18) est prévu dans le récipient de vaporisation (4), et le récipient de vaporisation étant recouvert avec un couvercle (15), situé au niveau du fond de l'enceinte de cuisson (3) et comprenant une ouverture de sortie de vapeur (16) disposée au-dessus de l'entonnoir d'évacuation (17), l'ouverture de sortie de vapeur étant pourvue d'un chanfrein (19) faisant saillie à peu près jusqu'à l'arête supérieure de l'entonnoir d'évacuation (17).

11. Appareil de cuisson selon la revendication 10, caractérisé ce que la conduite d'évacuation (18) est pourvue d'une pompe (20) et d'un clapet anti-retour (21) branché en amont ou en aval.

12. Appareil de cuisson selon la revendication 10 et/ou 11, caractérisé en ce que le récipient de vaporisation (4) est pourvu d'un siphon (22) menant dans l'entonnoir d'évacuation (17).

13. Appareil de cuisson selon la revendication 10 et/ou 11, caractérisé en ce que le récipient de vaporisation (4) est pourvu d'une conduite de purge (23), menant à la conduite d'évacuation (18) et obturable à volonté.

14. Appareil de cuisson selon l'une des revendications 10 à 13, caractérisé en ce que le couvercle (15) est relié de façon amovible au fond de l'enceinte de cuisson ou du récipient de vaporisation (4).

15. Appareil de cuisson selon l'une des revendications 10 à 14, caractérisé en ce que l'ouverture de sortie de vapeur (16) est simultanément réalisée sous forme de tamis anti-salissure pour l'eau de retour.

16. Appareil de cuisson selon l'une des revendications 12 à 15, caractérisé en ce que le bord supérieur de l'entonnoir d'évacuation (17) dépasse de tous côtés le bord inférieur du chanfrein (19).

17. Appareil de cuisson selon l'une des revendications 1 à 16, caractérisé en ce que la paroi de l'enceinte de cuisson est chauffée avant l'amenée de vapeur d'eau à l'enceinte de cuisson.

18. Appareil de cuisson selon la revendication 17, caractérisé en ce que la paroi de l'enceinte de cuisson est préchauffée à peu près à 100°C.

19. Appareil de cuisson selon la revendication 17, caractérisé en ce que la paroi de l'enceinte de cuisson est chauffée au moyen du chauffage électrique de l'enceinte de cuisson, simultanément au chauffage du récipient de vaporisation.

20. Appareil de cuisson selon l'une des revendications 17 à 19, caractérisé en ce que, pendant un processus de cuisson, l'enceinte de cuisson est chauffée de façon cadencée et alternée par le générateur d'air chaud ou le générateur de vapeur.

21. Appareil de cuisson selon la revendication 20, caractérisé en ce que les temps de cadencement attribués respectivement par la mise en service du générateur d'air chaud et du générateur de vapeur sont situés à peu près dans un rapport de 3:1.

22. Appareil de cuisson selon la revendication 20 ou 21, caractérisé en ce qu'un cycle de cadencement dure à peu près 1/2 minute.

Fig.1

Fig. 3

# Fig. 2

# Fig. 5

Fig. 4